## Europäisches Patentamt

## European Patent Office

## Office européen des brevets

(11) Veröffentlichungsnummer: **0 056 926**
**A1**

# EUROPÄISCHE PATENTANMELDUNG

(21) Anmeldenummer: **81730007.2**

(22) Anmeldetag: **19.01.81**

(51) Int. Cl.³: **C 02 F 1/28**
**B 01 D 53/02**

(43) Veröffentlichungstag der Anmeldung:
**04.08.82** Patentblatt **82/31**

(84) Benannte Vertragsstaaten:
**AT BE CH DE FR GB IT LI NL SE**

(71) Anmelder: **Fehle, Michael**
**Harbigstrasse 14**
**D-1000 Berlin 19(DE)**

(72) Erfinder: **Fehle, Michael**
**Harbigstrasse 14**
**D-1000 Berlin 19(DE)**

(54) **Die adsorptive Abwasserreinigung biologisch nicht abbaubarer organischer Stoffe, besonders Huminsäuren, Melanoidine, Lignin- und andere Sulfonsäuren, sowie die organischen Chlorverbindungen, mit Braunkohlenkoks als Adsorptionsmittel für alle fest/flüssig Reaktortypen, wobei das Abwasser im Kreislauf geführt wird.**

(57) Da bei der biologischen Vorreinigung im Hubstrahl-Reaktor diese Restschadstoffkonzentrationen bei hoher Belastung des Abwassers nicht abgebaut werden konnten, wurde dieses Verfahren mit Braunkohlenkoks entwikkelt. Dieses Verfahren beruht darauf, daß der Braunkohlenkoks in der Verbindung seines halbwegs polaren Charakters, der großen Oberflächenbeschaffenheit (großes Porenvolumen) und durch Betrieb im Kreislauf des Abwassers für alle fest/flüssig Reaktortypen, besonders im Wirbelschicht- und Festbett-Reaktor, mit hoher Strömungsgeschwindigkeit diese eminente Effektivität erlangt. Die schwer abbaubaren organischen und anorganischen Substanzen und die Schwermetallverbindungen werden nur durch diese obengenannte Kombination innerhalb kurzer Zeit adsorbiert.

Für alle Braunkohlenkoksarten und -sorten und für alle Braunkohlenkoksarten und -sorten mit anderen Feststoffkomponenten, die Temperaturänderung, die Druckänderung, die Änderung der Strömungsgeschwindigkeit, die Änderung des Abwasser- (Gas-) Volumens, die Änderung der Ausgangskonzentration, die Änderung der Partikelgröße und die Änderung der Partikelmenge bestimmt die günstigere Kinetik und damit die Rentabilität des Verfahrens. Durch ein Nachschalten von mehreren Reaktortypen ist somit eine maximale Ausnutzung der Reaktionskapazität innerhalb kurzer Reaktionsdauer gewährleistet.

Durch dieses Verfahren ist eine Stofftrennung aller fest/flüssigen, fest/gasförmigen und fest/flüssig/gasförmigen Systeme gekennzeichnet. Die weitere Verwertung des Braunkohlenkokses ist ebenfalls garantiert.

Bild 1 Festbett-Reaktor- und Wirbelschicht-Reaktor-Anlage - das Abwasser im Kreislauf geführt

Bild 3 zeitlicher Konzentrationsverlauf in Abhängigkeit von den Koksarten bei konstantem Partikeldurchmesser (2,0 - 1,5 mm) mit einer Anfangskonzentration von $TOC_o$ = 740 mg/l

EP 0 056 926 A1

Croydon Printing Company Ltd.

1 Schlauchpumpe
2 Bypass
3 Rotameter
4 Wärmetauscher
5 Gewindestab
6 Siebe mit Dichtungen
7 Gärröhrchen
8 Kohle- und Kokspartikel

a) Festbett-Reaktor-Anlage

9 Thermometer
10 Probenahme
11 Siebböden

b) Wirbelschicht-Reaktor-Anlage

Bild 1

Holzkohle
Steinkohlenkoks
Aktivkohle
Braunkohlenkoks
$2,0 < dp < 1,5$ mm
$TOC_0 = 740$ mg/l

bez. Konzentration $\frac{TOC}{TOC_0}$

Reaktionsdauer $t$ [min]

Bild 3

Die adsorptive Abwasserreinigung biologisch nicht abbaubarer organischer Stoffe, besonders Huminsäuren, Melanoidine, Lignin- und andere Sulfonsäuren, sowie die organischen Chlorverbindungen, mit Braunkohlenkoks als Adsorptionsmittel für alle fest/flüssig Reaktortypen, wobei das Abwasser im Kreislauf geführt wird

Die Erfindung betrifft ein Verfahren der Abwasserreinigung für alle fest/flüssig Reaktortypen mit Braunkohlenkoks; dabei werden die schwer abbaubaren organischen Substanzen des Abwassers in kurzer Zeit adsorbiert.

Die biologische Reinigung bei hochbelasteten organischen Abwässern hat ihre natürliche und technische Grenze erreicht.

Ausgangspunkt für diese Untersuchung ist das Filtratabwasser des Klärwerkes Berlin-Marienfelde.
Dieses Filtratabwasser der Klärschlammkonditionierung wird biologisch im Hubstrahl-Reaktor vorgereinigt, und es wird das Adsorptionverhalten der einzelnen Koksarten untersucht, um die Restschadstoffkonzentrationen biologisch nicht abbaubarer organischer Stoffe herauszuholen.
Die biologisch nicht abbaubaren organischen Stoffe sind vor allem die Huminsäuren und die Melanoidine.
Melanoidine sind braune, kolloidale Farbstoffe, die sich auch bei der Bäckerei, Brauerei- und Zuckerherstellung bilden.
Da bei der biologischen Vorreinigung im Hubstrahl-Reaktor diese Restschadstoffkonzentrationen bei hoher Belastung des Abwassers nicht abgebaut werden konnte, wurde dieses neue Verfahren entwickelt, das gegenüber dem klassischen Fall der Adsorption über Aktivkohle den Vorteil hat, energie- und kostengünstig zu arbeiten.

Der Erfindung liegt die Aufgabe zugrunde, alle schwer abbaubaren organischen Abwasserinhaltsstoffe zu entfernen.

Diese Aufgabe wird erfindermäßig dadurch gelöst, daß der Braunkohlenkoks die schwer abbaubaren organischen Stoffe noch besser adsorbiert als die klassische Aktivkohle; liegt daran, daß der Braunkohlenkoks weitaus mehr organische Bestandteile (Huminsäuren) besitzt als alle anderen Koksarten.

Dies ergibt sich aus der Tatsache, daß der Braunkohlenkoks in der Verbindung seines halbwegs polaren Charakters, der großen Oberflächenbeschaffenheit (großes Porenvolumen) und durch Betrieb im Kreislauf des Abwassers für alle fest/flüssig Reaktortypen, besonders im Wirbelschicht- und Festbett-Reaktor, mit hoher Strömungsgeschwindigkeit, diese eminente Effektivität erlangt.

Die schwer abbaubaren organischen und anorganischen Substanzen und die Schwermetallverbindungen werden nur durch diese obengenannte Kombination innerhalb kurzer Zeit adsorbiert.

Besonders die Huminsäuren, die Melanoidine usw. werden bevorzugt eliminiert.

Die mit der Erfindung erzielten Vorteile bestehen insbesondere darin, daß überhaupt die Restschadstoffkonzentrationen aus der biologischen Vorreinigung total gesenkt werden.

Die klassische Adsorption über Aktivkohle ist ein teueres Verfahren, denn die Aktivkohle herzustellen, bzw. die Regenerierung der Aktivkohl ist mit viel Energie und Kosten verbunden.

Gleichzeitig ist der Wirkungsgrad der Aktivkohle viel geringer.

Zwei Ausführungsbeispiele der Erfindung sind in den Zeichnungen darge stellt und werden im folgenden näher beschrieben.

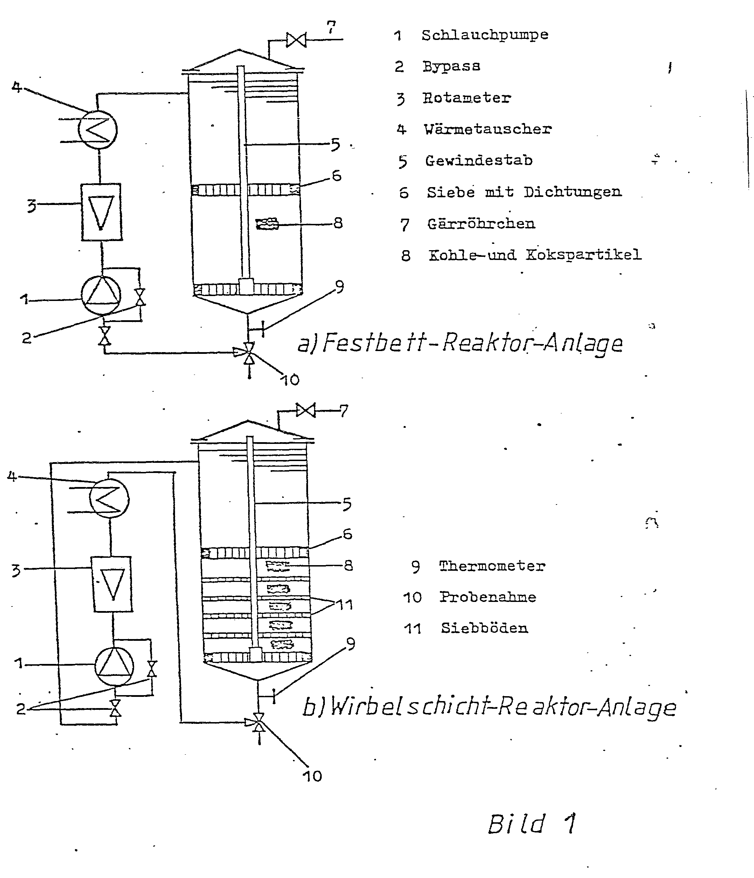

Bild 1 Festbett-Reaktor-und Wirbelschicht-Reaktor-Anlage - das Abwass im Kreislauf geführt

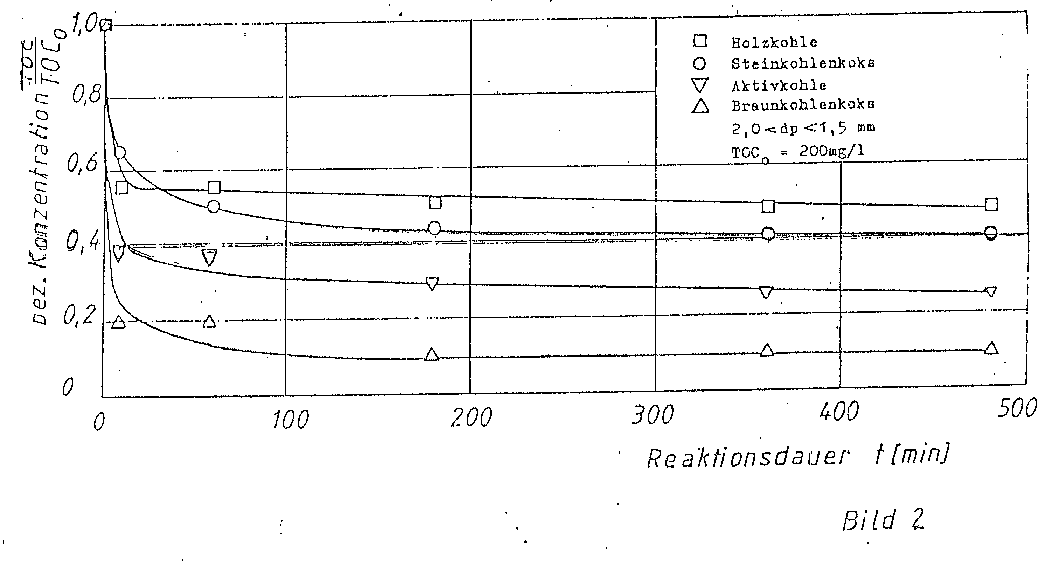

Bild 2 zeitlicher Konzentrationsverlauf in Abhängigkeit von den Koks ten bei konstantem Partikeldurchmesser (2,0 - 1,5) mit einer Anfangs konzentration von $TOC_o = 200 \frac{mg}{l}$

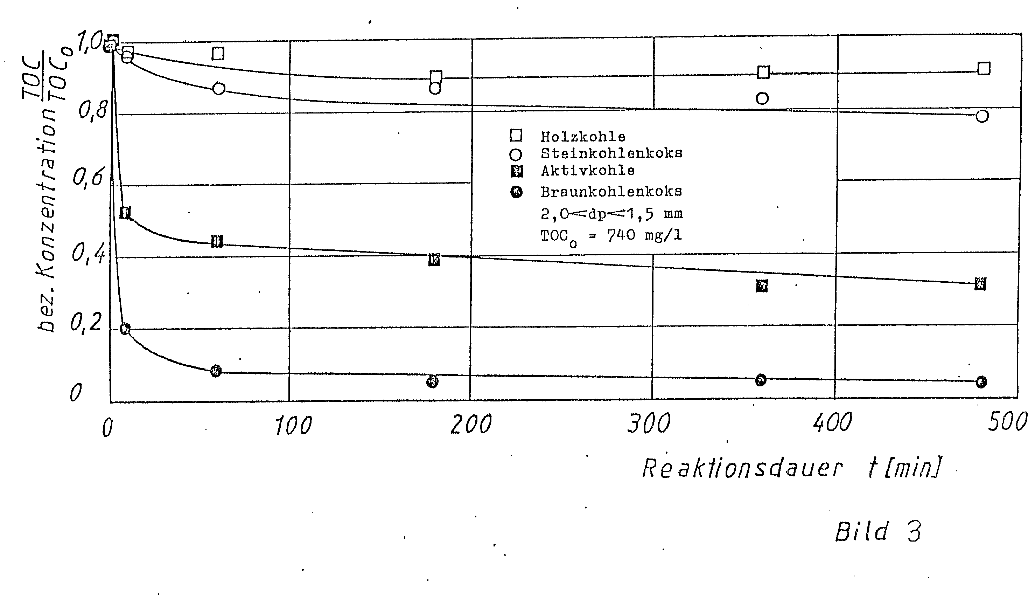

Bild 3 zeitlicher Konzentrationsverlauf in Abhängigkeit von den Koks ten bei konstantem Partikeldurchmesser (2,0 - 1,5) mit einer Anfangs konzentration von $TOC_o = 740 \frac{mg}{l}$

Tabelle 1 die technischen Kenndaten von Braunkohlenkoks

Tabelle 2 geometrische Daten der Festbett-Reaktor-Anlage Tabelle 3 geometrische Daten der Wirbelschicht-Reaktor-Anlage

Die beiden Versuchsreihen wurden mit frischen Koksarten durchgeführt und unterlagen folgenden konstaten Bedingungen:

| | |
|---|---|
| Temperaturkonstanz | $T = 20\ ^{\circ}C$ |
| Druckkonstanz | $p = 760$ mbar |
| Volumendurchsatzkonstanz | $\dot{V} = 130\ \frac{l}{h}$ |
| Abwasservolumenkonstanz | $V = 700$ ml |
| Partikelmengekonstanz | $m = 200$ g |
| Partikelgrößekonstanz | $d = 2{,}0 - 1{,}5$ mm |

Mit diesen Werten errechnete sich eine Strömungsgeschwindigkeit

$$u = \frac{\dot{V}}{F} = \frac{130\ dm^3}{1{,}13\ dm^2 h} = 11{,}5\ \frac{m}{h}\ .$$

Untersucht wurde die Konzentrationsänderung, gemessen der TOC-Wert (TOTAL-ORGANIC-CARBON), des Abwassers als Funktion der Zeit durch Variation folgender Parameter:

a) Koksarten

b) Ausgangskonzentration ($TOC_o$-Wert zur Zeit $t = 0$)

Chemische und physikalische Analysendaten von Herdofenkoks / 20 /

| Sortenbezeichnung | | Koksstaub | Anteil (Gew.%) | Feinstkoks | Anteil (Gew.%) | Feinkoks | Anteil (Gew.%) |
|---|---|---|---|---|---|---|---|
| Kornzusammensetzung: | | | | | | | |
| Korngröße | mm | $> 0,315$ | 4 | $> 1,000$ | 25 | $> 4,00$ | 1 |
| | | $0,125 - 0,315$ | 20 | $0,800 - 1,000$ | 25 | $3,15 - 4,00$ | 5 |
| | | $0,090 - 0,125$ | 10 | $0,500 - 0,800$ | 25 | $2,00 - 3,15$ | 25 |
| | | $0,063 - 0,090$ | 15 | $0,315 - 0,500$ | 10 | $1,25 - 2,00$ | 53 |
| | | $0,032 - 0,063$ | 15 | $0,063 - 0,315$ | 13 | $1,00 - 1,20$ | 13 |
| | | $< 0,032$ | 36 | $< 0,063$ | 2 | $< 1,00$ | 3 |
| Schüttdichte | $g/cm^3$ | $0,53 \pm 0,05$ | | $0,53 \pm 0,05$ | | $0,50 \pm 0,05$ | |
| Kurzanalyse: | | | | | | | |
| Wassergehalt | Gew.% | 2,0 | | 2,0 | | 2,0 | |
| Aschegehalt | Gew.% | 8,0 | | 8,0 | | 7,5 | |
| Fl.Bestandteile | Gew.% | 3,5 | | 3,5 | | 3,0 | |
| Fixer Kohlenstoff | Gew.% | 86,5 | | 86,5 | | 87,5 | |
| Heizwert (Hu) | kJ/kg | 29 000 | | 29 000 | | 29 500 | |
| Physikalische Kennziffern | | | | | | | |
| Wahre Dichte | $g/cm^3$ | | | 1,85 | | | |
| Scheinbare Dichte | $g/cm^3$ | | | 0,90 | | | |
| Porenvolumen | % | | | 50 | | | |
| | $cm^3/g$ | | | 0,57 | | | |
| Spez.Oberfläche | $m^2/g$ | | | 250 | | | |

- 4 -

Tabelle 2 geometrische Daten der Festbett-Reaktor-Anlage

Geometrische Daten:

| | | |
|---|---|---|
| Höhe des Reaktors | 26,0 | cm |
| Innendurchmesser | 6,0 | cm |
| Drahtsiebe | 0,04 | cm |

Volumen der Anlagenteile:

| | | |
|---|---|---|
| Reaktor | 0,940 | l |
| Rotameter | 0,020 | l |
| Wärmetauscher | 0,020 | l |
| Schläuche | 0,010 | l |
| Drahtsiebe | – | |
| Gesamtvolumen | 1 | l |

Schlauchpumpe:

| | |
|---|---|
| Volumendurchsatz | $0 - 200 \ \frac{l}{h}$ |

Tabelle 3 geometrische Daten der Wirbelschicht-Reaktor-Anlage

Geometrische Daten:

| | | |
|---|---|---|
| Höhe der Kolonne | 26,0 | cm |
| Innendurchmesser | 6,0 | cm |
| Bodenzahl | 5,0 | cm |
| Bodenabstand | 3,0 | cm |
| Lochdurchmesser | 0,6 | cm |
| Drahtsiebe | 0,04 | cm |

Volumen der Anlagenteile:

| | | |
|---|---|---|
| Reaktor | 0,940 | l |
| Rotameter | 0,020 | l |
| Wärmetauscher | 0,020 | l |
| Schläuche | 0,010 | l |
| Drahtsiebe | – | |
| Gesamtvolumen | 1 | l |

Schlauchpumpe:

| | | |
|---|---|---|
| Volumendurchsatz | 0 – 200 | $\frac{l}{h}$ |

Patentansprüche

1. Die adsoptive Abwasserreinigung biologisch nicht abbaubarer organischer Stoffe, besonders Huminsäuren, Melanoidine, Lignin- und andere Sulfonsäuren, sowie die organischen Chlorverbindungen, mit Braunkohlenkoks als Adsorptionsmittel für alle fest/flüssig Reaktortypen, wobei das Abwasser im Kreislauf geführt wird
Die Erfindung betrifft ein Verfahren der Abwasserreinigung für alle fest/flüssig Reaktortypen mit Braunkohlenkoks; dabei werden die schwer abbaubaren organischen Substanzen des Abwassers in kurzer Zeit adsorbiert.
Dies ergibt sich aus der Tatsache, daß der Braunkohlenkoks in der Verbindung seines halbwegs polaren Charakters, der großen Oberflächenbeschaffenheit (großes Porenvolumen) und durch Betrieb im Kreislauf des Abwassers für alle fest/flüssigen Reaktortypen, besonders im Wirbelschicht- und Festbett-Reaktor, mit hoher Strömungsgeschwindigkeit diese eminente Effektivität erlangt.

2. Für alle Braunkohlekoksarten und -sorten nach Anspruch 1 und

3. für alle Braunkohlekoksarten und -sorten mit anderen Feststoffkomponenten nach Anspruch 1 und

4. die Temperaturänderung nach Anspruch 1 und

5. die Druckänderung nach Anspruch 1 und

6. die Änderung der Strömungsgeschwindigkeit (Volumendurchsatz nach Anspruch 1 und

7. die Änderung des Abwasser- (Gas-) Volumens nach Anspruch 1 und

8. die Änderung der Ausgangskonzentration nach Anspruch 1 und

9. die Änderung der Partikelgröße an Braunkohlenkoks, speziell die kleinere Partikelgröße nach Anspruch 1 besitzt ein noch größeres Porenvolumen und

10. die Änderung der Partikelmenge an Braunkohlenkoks, speziell die größere Partikelmenge nach Anspruch 1 hat wiederum ein noch größeres Porenvolumen, damit wird die günstigere Kinetik und die Rentabilität des Verfahrens bestimmt.

11. Durch dies oben genannte Verfahren ist eine Stofftrennung aller fest/flüssig Systeme (Lösungen, Dispersionen Farbstoffe usw) nach Anspruch 1 - 10 und

12. eine Stofftrennung aller fest/gasförmigen Systeme (selektive Gasreinigung usw.) nach Anspruch 1 - 10 und

13. eine Stofftrennung aller fest/flüssig/gasförmigen Systeme (biologische und adsorptive Reinigung in einem Reaktortyp usw. ) nach Anspruch 1 - 10.

14. Die Schwermetalle und Schwermetallverbindungen nach Anspruch 1 -13 und

15. die schwer abbaubaren anorganischen Substanzen nach Anspruch 1 - 13 werden ebenfalls absorbiert/adsorbiert.

16. Durch ein Nachschalten von mehreren Reaktortypen nach Anspruch 1 - 15 ist somit eine maximale Ausnutzung der Adsorptions-/Absorptionskapazität innerhalb einer kurzen Reaktionsdauer gewährleistet.

17. Die weitere Verwertung des Braunkohlenkokses (z. B. zu Carbid) nach Anspruch 1 - 16

1/3

0056926

1 Schlauchpumpe
2 Bypass
3 Rotameter
4 Wärmetauscher
5 Gewindestab
6 Siebe mit Dichtungen
7 Gärröhrchen
8 Kohle-und Kokspartikel

a) Festbett-Reaktor-Anlage

9 Thermometer
10 Probenahme
11 Siebböden

b) Wirbelschicht-Reaktor-Anlage

Bild 1

Holzkohle

Steinkohlenkoks

Aktivkohle

Braunkohlenkoks

$2,0 < dp < 1,5$ mm

$TOC_0 = 200$ mg/l

Reaktionsdauer $t$ [min]

dez. Konzentration $\dfrac{TOC}{TOC_0}$

2/3

0056926

Bild 2

Bild 3

3/3

0056926
Nummer der Anmeldung
EP 81 73 0007

Europäisches Patentamt

**EUROPÄISCHER RECHERCHENBERICHT**

| | EINSCHLÄGIGE DOKUMENTE | | KLASSIFIKATION DER ANMELDUNG (Int Cl ³) |
|---|---|---|---|
| Kategorie | Kennzeichnung des Dokuments mit Angabe, soweit erforderlich, der maßgeblichen Teile | betrifft Anspruch | |
| X | DE - A - 2 201 525 (BATTELLE-INST.) <br><br> * das ganze Dokument * <br><br> --- | 1-17 | C 02 F 1/28 <br> B 01 D 53/02 |
| X | BRENNST.-WÄRME-KRAFT, Band 27, Nr. 7, Juli, 1975, V.D.I. Verlag DÜSSELDORF (DE) F.H. FRANKE u.a. "Untersuchungen zur Abgas-und Abwasserreinigung mit Adsorptionskoksen aus Braunkohle", Seiten 284-287 <br><br> * Seiten 284-287: "Untersuchungen zur Abgas-und Abwasservereinigung usw" <br><br> --- | ·1-16 | |
| | DE - A - 2 650 300 (A. STAUFFER et al.) <br><br> * Seiten 1 und 2; Seite 10, Zeilen 2-12 * <br><br> --- | 1-11 | RECHERCHIERTE SACHGEBIETE (Int. Cl.³) <br><br> C 02 F 1/28 |
| A | DE - A - 2 136 971 (UNIV. OF MELBOURNE) | | |
| A | CH - A - 174 355 (E. WEGMANN) | | |
| A | WATERRESEARCH, Band 14, Nr. 2, 1980, Pergamon Press OXFORD (GB) J.J. McCREARY et al.: "Characterization and activated carbon adsorption of several humic substances" Seiten 151-160 | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 18-09-1981 | VAN AKOLEYEN |

EPA form 1503.1 06.78